# FASCICULE DE BREVET EUROPEEN

(11) **EP 2 398 856 B1**
(45) Date de publication et mention de la délivrance du brevet: **25.11.2015**
(21) Numéro de dépôt: 10708240.6
(22) Date de dépôt: 17.02.2010
(51) Int. Cl.: C08L 5/06, C08L 9/06, C08L 89/06

(54) **PROCÉDÉ D'OBTENTION D'UN AGRO MATÉRIAU, NOTAMMENT AGRO LIANT OU AGRO COMPOSITE, ET AGRO MATÉRIAU OBTENU PAR UN TEL PROCÉDÉ**
VERFAHREN ZUM ERHALTEN EINES AGROMATERIALS, INSBESONDERE EIN AGRO-BINDEMITTEL ODER AGRO-VERBUNDSTOFF UND AGRO-MATERIAL AUS DIESEM VERFAHREN
METHOD FOR OBTAINING AN AGRO-MATERIAL, IN PARTICULAR AN AGRO-BINDER OR AGRO-COMPOSITE, AND AGRO-MATERIAL OBTAINED BY SAID METHOD

(30) Priorité: 17.02.2009 FR 0900714
(43) Date de publication de la demande: 28.12.2011
(73) Titulaire: Université de Picardie Jules Verne, 80025 Amiens Cedex (FR); Societe Picarde D'innovations Et De Developpements Des Materiaux - SPIDEM, 02590 Villers Saint Christophe (FR)
(72) Inventeur: QUENEUDEC-T'KINT, Michèle, F-80025 Amiens Cedex 1 (FR); KHAZMA, Mahmoud, F-80025 Amiens Cedex (FR)
(74) Mandataire: Schreiber, Ina
(86) Numéro de dépôt international: PCT/FR2010/000133
(87) Numéro de publication internationale: WO 2010/094856

(56) Documents cités:
- EP-A1- 1 588 815
- FR-A- 319 125
- GB-A- 656 785
- US-A1- 2004 062 920
- US-A1- 2004 186 197
- US-A1- 2005 098 917
- US-A1- 2006 255 507
- COFFIN D R; FISHMAN M L; COOKE P H: "MECHANICAL AND MICROSTRUCTURAL PROPERTIES OF PECTIN/STARCH FILMS" JOURNAL OF APPLIED POLYMER SCIENCE, JOHN WILEY AND SONS INC. NEW YORK, US, vol. 57, no. 6, 8 août 1995 (1995-08-08), pages 663-670, XP000541113 ISSN: 0021-8995

## Description

L'invention concerne un procédé d'obtention d'un agro matériau, notamment agro liant ou agro composite, ainsi qu'un agro matériau obtenu par un tel procédé.

Un tel agro matériau trouvera une application particulière, mais non limitative, dans le domaine de la construction, du transport, de l'emballage, de l'équipement électronique ou des technologies de communication.

Par agro matériau, on entend ici un matériau composé pour tout ou partie de matières issues de l'agriculture.

Le domaine de l'invention est celui des polymères biodégradables. Bien souvent, il s'agit de matériaux d'origine végétale dont la transformation biochimique donne lieu à l'obtention de matières premières possédant des caractéristiques rhéologiques qui s'apparentent à celles des thermoplastiques traditionnels.

Ces dernières années, de nombreuses recherches ont concerné les polymères biodégradables, plus particulièrement concernant les polyglycolides [Gerecht et al. (2007)], les polylactides [Yang et al. (1999)] ainsi que différents copolymères.

Peu de travail a été consacré aux élastomères jusqu'à ce que Wang Yadong et al. synthétisent le poly(glycérol sébacate) Zhang et al. (2003), Wang et al. (2003), Wang et al. (2002), élastomère biodégradable obtenu par polycondensation du glycérol et de l'acide sébacique. Cet élastomère présente toutefois une biodégradabilité faible et lente.

Tao ding et al. (2006) ont réussi à fabriquer un nouvel élastomère biodégradable, le (poly(PEG-co-CA) (PEC) synthétisé par polycondensation du polyéthylène glycol (PEG) et de l'acide citrique (AC) sous pression atmosphérique sans catalyseur. La réaction peut être arrêtée à partir de 15 H ou poursuivie jusqu'à 36 H, suivant le degré de liaison souhaité mais d'après Tao Ding, le degré de polymérisation augmente très légèrement au-delà de 24 H de postpolymérisation. Cet élastomère est incolore, inodore, assez visqueux.

La demande de brevet US 2004/0186197 A1 concerne également des matériaux issus de coproduits agricoles.

La gélatine est une protéine animale extraite après hydrolyse de matières premières riches en collagène. Suivant le type d'hydrolyse, milieu acide ou milieu alcalin, on obtient les gélatines de type A ou B. Quel que soit le type d'hydrolyse, la gélatine est ensuite extraite à l'eau chaude.

Elle possède des propriétés gélifiantes, épaississantes, émulsifiantes, moussantes. Elle peut être utilisée pour floculer des particules colloïdales. Elle devient insoluble dans l'eau sous l'action du formaldéhyde. Le bichromate de potassium durcit la gélatine quand elle est exposée à la lumière UV et elle devient insoluble dans l'eau.

Les pectines sont des polymères de polysaccharides acides présents dans les parois des cellules végétales. Les pectines sont composées d'une chaîne principale d'acide uronique lié en 1-4. Régulièrement entre ces monomères, s'intercalent des molécules de rhamnoses par des liaisons 1-2 et 1-4. Des ramifications, constituées par exemple de molécules de galactane et d'arabinane, existent au niveau des acides uroniques comme au niveau du rhamnose.

Les pectines sont des molécules relativement stables, résistant à des températures de plus de 80°C à pH neutre.

Dans la nature, elles sont dégradées par des enzymes *(pectine lyase*) produites par des microbes ou champignons [Koubala et al. (2006) et Saad et al. (2007)], Einhorn-stoll et al. (2007). A pH 6, le chauffage des pectines en solution aqueuse à 80-90°C conduit à une décomposition de ces polysaccharides. Cette décomposition est appelée beta élimination. Elle débute par une séparation des chaînes de pectines suivie par la coupure de ces chaînes en petits éléments.

Ce phénomène entraîne une diminution de la viscosité et une diminution du pH. L'addition d'une quantité supplémentaire de pectines à ce mélange de petits éléments conduit à la formation d'une glue forte dont l'utilisation a déjà été citée dans l'industrie du tabac [Schmekel et al. (1992)].

De même, des études concernant l'addition de pectines à un gel de polyéthylènimine ont été menées et ont montré que cette opération augmente la viscosité du mélange, diminue le temps de séchage et augmente la résistance mécanique du produit final.

On a aussi pu constater que l'exposition du mélange aux rayonnements microondes rend le gel formé plus visqueux et accélère le durcissement du gel en relation avec ces réactions d'hydrolyse des pectines qui ont pu être détectées par spectroscopie infrarouge et qui conduisent à des modifications de structures de ces pectines. Ce mélange a ainsi pu être utilisé avec profit dans un procédé de traitement des granulats lignocellulosiques avec pour conséquence la diminution de leur sensibilité à l'eau et une amélioration des performances thermiques des composites cimentaires élaborés à partir de ces granulats [K.Khazma 2008]].

Dans le domaine du lin, lors du teillage, on recueille des poussières qui sont un mélange complexe de ciments pectiques, de fractions lignocellulosiques et minérales. On peut estimer leur composition à environ 5,5% d'eau, 48,8% de matières minérales, et 45,7% de matières organiques (8,7% d'hémicelluloses, 15% de cellulose, 10,5% de lignines et 11,5% de substances solubles.

Ces substances solubles sont constituées d'environ 6% de protéines dégradées, le reste étant des ciments pectiques. La fraction minérale est composée de plus de 60% de silicium, d'environ 25% d'aluminium, 5% de calcium, 5% de sodium et 3% de magnésium. Dans le cas du lin textile, les poussières de teillage représentent environ 10% de la biomasse récoltée : la quantité générée annuellement en France est estimée à 600 tonnes. Les poussières issues du teillage sont peu valorisées.

Le but de la présente invention est de proposer un procédé d'obtention d'un agro matériau tel que agro liant ou agro composite permettant de valoriser les coproduits ou produits agricoles issus du règne animal et/ou végétal.

Un but de l'invention peut être de proposer un tel procédé permettant la valorisation de coproduits agricoles tels que notamment poussières de défibrage du lin ou du chanvre.

D'autres buts et avantages de l'invention apparaîtront au cours de la description qui va suivre qui n'est donnée qu'à titre indicatif et qui n'a pas pour but de la limiter.

L'invention concerne tout d'abord un procédé d'obtention d'un agro matériau rigide ou élastomérique tel que agro liant ou agro composite, à partir de coproduits ou produits agricoles issus du règne animal et/ou végétal dans lequel :
- on mélange un composé pectique issu du végétal qui se présente sous la forme de poussières de teillage de lin ou poussières de défibrage de chanvre, un gel et un solvant,
- on soumet le mélange à un traitement thermique par micro-ondes afin d'obtenir ledit agro matériau.

Selon les caractéristiques optionnelles non limitatives :
- le composé pectique est de la poussière de teillage du lin et le gel est de la gélatine,
- ledit composé pectique se présente sous la forme de :
   - poussières de teillage de lin ou poussières de défibrage de chanvre, en association ou non avec des fines minérales ;
- le gel peut se présenter sous la forme d'un gel d'origine protéinique tel que la gélatine, ou encore un gel synthétique ou encore un gel d'origine végétale tel qu'un gel à base d'algues ;
- le solvant peut être de l'eau, du glycérol, de l'éthanol, du sorbitol, du diéthylamine, du polyéthylène glycol ou encore un autre solvant,
- le mélange peut comprendre en outre, un additif d'hydrophobisation, tel que l'huile, acides gras, inférieur à 5% en poids de la somme totale des composants du mélange ;
- on peut faire subir au mélange un moussage protéinique avant l'étape de traitement thermique ;
- ledit moussage protéinique peut être réalisé à partir d'hémoglobine du sang animal ;
- on peut colorer le mélange par l'addition de pigments ;
- le traitement thermique est notamment un traitement par micro-ondes ; la température du mélange doit être au moins de 50°C, inférieure à 100 °C,
- on ajoute au mélange, le cas échéant moussé, voire coloré, une charge minérale ou organique, sous forme granulaire ou micronisée, avant durcissement du mélange ;
- la charge peut être de la matière lignocellulosique, choisie, notamment dans le groupe des coproduits céréaliers, tels que produits du défibrage du lin ou du chanvre, pulpes de betterave, anas de lin, chènevotte, pailles, refus de silos, menues pailles de céréales ou de colza, poussières de battage ou tout autre coproduit lignocellulosique issus des activités agricoles ou poussant à l'état sauvage. Elles pourront également provenir de l'exploitation forestière ;
- on peut ajouter au mélange, chargé ou non, des fibres végétales, avant durcissement du mélange ;
- on met en forme ledit mélange, chargé ou non, éventuellement fibré, par coulage, thermocompression, rotation, extrusion, calandrage, enduction, avant durcissement du mélange ;
- les matériaux obtenus peuvent subir des températures mécaniques après durcissement (sciage, fraisage, ...) ;
- l'ensemble des composants dudit mélange peut être biodégradable à l'exception des charges minérales éventuelles de telle façon à obtenir un agro matériau biodégradable.

L'invention concerne également l'utilisation dudit agro matériau obtenu selon le procédé conforme à l'invention, dans le domaine de la construction, du transport, de l'emballage, de l'équipement électronique ou des technologies de communication (tel que par exemple support de puces, de circuits imprimés, de coques de téléphone ou autres appareils électroniques).

L'invention concerne également un agro matériau rigide ou du type élastomérique, obtenu selon le procédé conforme à l'invention.

Aussi l'invention concerne un procédé d'obtention d'un agro matériau tel qu'agro liant ou agro composite à partir de coproduits ou produits agricoles issus du règne animal et/ou végétal.

Selon le procédé, on mélange :
- un composé pectique issu du végétal qui se présente sous la forme de poussières de teillage de lin ou poussières de défibrage de chanvre, un gel et un solvant,
- on soumet le mélange à un traitement thermique par micro-ondes afin d'obtenir ledit agro matériau.
Ledit composé pectique se présente sous la forme de poussières de teillage de lin ou poussières de défibrage du chanvre, en association ou non avec des fines minérales.

Le gel peut se présenter sous la forme d'un gel d'origine protéinique, tel que la gélatine, ou encore un gel synthétique, ou encore un gel d'origine végétale tel qu'un gel à base d'algues.

Le solvant peut être de l'eau, du glycérol, de l'éthanol, du sorbitol, du diéthylamine, du polyéthylène glycol ou encore un autre solvant.

Le mélange peut présenter en outre un additif visant à modifier les caractéristiques physiques et/ou mécaniques de l'agro polymère. L'additif peut être un produit d'hydrophobisation comme l'huile, des acides gras, des émulsions, des agents moussants, des antiseptiques et biocides spécifiques. Cet additif d'hydrophobisation est inférieur à 5% en poids de la somme totale des composants du mélange.

Aussi, le procédé conforme à l'invention peut comprendre les étapes suivantes :
- Obtention d'un mélange homogénéisé, notamment à température ambiante, notamment par exemple de :
   - gélatine ou tout autre gel protéinique ou non, issu du règne animal ou végétal ou synthétisé,
   - poussières issues du teillage, séparées ou non de leur fraction lignocellulosique, ou polysaccharides végétaux issus d'autres espèces végétales ou d'une espèce végétale riche en polysaccharides, en association ou non avec des fines minérales ou encore un jus pectique issu du traitement des végétaux,
   - un additif tel que huile, acides gras, émulsion, agents moussants, antiseptiques, biocides spécifiques,
   - un solvant choisi parmi l'eau, l'éthanol, le glycérol et autres.

Le mélange précité peut subir un moussage notamment protéinique, tout particulièrement à partir d'hémoglobine de sang animal. Le mélange précité, le cas échéant moussé, peut être coloré dans la masse par l'addition de pigments.

Le procédé peut comprendre une étape dans laquelle on ajoute au mélange, le cas échéant moussé, voire coloré, une charge. La charge peut être minérale ou organique, sous forme granulaire ou micronisée, ajoutée avant le durcissement du mélange.

Plus précisément, la charge peut être de la matière lignocellulosique choisie notamment dans le groupe des coproduits céréaliers, tels que produits du défibrage du lin ou du chanvre, pulpes de betteraves, anas de lin, chènevotte, pailles, refus de silos, menues pailles de céréales ou tout autre coproduit lignocellulosique issus de la production agricole ou forestière ou poussant à l'état sauvage.

Le procédé peut comprendre en outre une étape dans laquelle on ajoute au mélange, le cas échéant moussé, et coloré et/ou chargé, des fibres végétales avant durcissement du mélange.

Le procédé peut comprendre en outre une étape dans laquelle on met en forme ledit mélange, chargé ou non, éventuellement fibré, par coulage, thermocompression, rotation, extrusion, calandrage, enduction avant durcissement du mélange.

Avantageusement l'ensemble des composants du mélange peut être biodégradable, à l'exception des charges minérales éventuelles, de telle façon à obtenir un agro matériau biodégradable.

Le traitement thermique peut être un traitement par micro-ondes dans lequel on porte le mélange à une température au moins égale à 50°, notamment inférieure à 100 °C, de préférence entre 70°C et 90°C. Après refroidissement, le mélange durci pour donner des matériaux rigides ou viscoélastiques suivant la composition de départ. La mécanique du matériau viscoélastique ou rigide dépendra essentiellement du solvant choisi et des charges ajoutées en mélange.

Quelques exemples non limitatifs sont décrits par la suite.

### EXEMPLE 1 :

A une quantité de poussières de défibrage (lin par exemple), débarrassées de la fraction lignocellulosique, on ajoute de l'eau. L'eau peut être substituée en totalité ou en partie par du glycérol, de l'éthanol, du sorbitol, de la diéthylamine, du polyéthylène glycol ou un autre solvant. Le solvant est ajouté dans des proportions pouvant aller de 5 à 1.000% en masse, de préférence de 100% en masse par rapport à la poussière, suivant la texture souhaitée. L'ensemble est bien homogénéisé par malaxage.

On ajoute alors au mélange de la gélatine en poudre dans des proportions de 5 à 2000% en masse par rapport à la quantité de poussière, de préférence dans une proportion de 100% en masse.

L'ajout d'une faible quantité d'huile diminue le caractère hydrophile du matériau sans modifier la cohésion. Cette quantité peut varier de 0,1 à 30% par rapport à la masse totale du mélange, de 5% de préférence.

L'ajout de stéarate de magnésium dans des proportions de 2 à 10% par rapport à la poussière de défibrage, de préférence de 7%, diminue l'adhérence du produit final sur les supports.

L'ensemble bien mélangé est soumis à un traitement micro-ondes. On obtient un mélange épais qui, après refroidissement et séchage, conduit à une matière de couleur foncée plus ou moins rigide suivant la formulation.

### EXEMPLE 2 :

Les poussières de défibrage de l'exemple 1 sont substituées par des pectines commerciales telles que par exemple des pectines de pommes ou de citrons, dans les mêmes proportions et de préférence dans une proportion de 100% en masse. On obtient un matériau transparent, rigide ou déformable suivant la nature du solvant.

### EXEMPLE 3 :

Les poussières de défibrage de l'exemple 1 sont substituées en totalité ou en partie par une farine de marrons d'Inde entiers. Le durcissement du mélange est extrêmement rapide, on obtient un matériau très résistant.

### EXEMPLE 4 :

La gélatine de l'exemple 1 est substituée en totalité par un gel synthétique et notamment le polyéthylène glycol-co-acide citrique. Les poussières sont substituées, en totalité ou en partie, par des pectines commerciales suivant la couleur souhaitée. Dans le cas d'un mélange polyéthylène glycol-co-acide citrique et d'eau, on obtient après exposition à un traitement thermique, notamment micro-ondes, un polymère transparent qui durcit rapidement.

### EXEMPLE 5 :

Aux matériaux préparés suivant les exemples 2 à 4, on ajoute, durant l'opération de mélange, avant le traitement thermique, notamment micro-ondes, des pigments minéraux ou organiques. On obtient un matériau coloré, rigide ou déformable suivant la nature du solvant.

### EXEMPLE 6 :

Aux matériaux préparés suivant les exemples 1 à 5, on ajoute, avant refroidissement, des anas de lin ou tout autre produit ou coproduit lignocellulosique dans des proportions pouvant aller de 10% à 600% en volume. L'ensemble est ensuite mis en moule et légèrement compacté. Les matériaux agglomérés obtenus sont légers et résistants. Ils possèdent de bonnes qualités d'absorption acoustique et d'isolation thermique.

### EXEMPLE 7 :

Aux matériaux préparés selon les exemples 1 à 5, on ajoute, avant refroidissement, des anas de lin ou tout autre produits lignocellulosique dans des proportions massiques fraction cellulosique/agro liant comprises entre 0,3 et 0,6. L'ensemble est soumis à un malaxage jusqu'à obtention d'un enrobage homogène, puis séché en maintenant une agitation pour éviter l'agglomération des fractions traitées. L'absorption d'eau des fractions cellulosiques ainsi traitées est réduite de 50 à 70%. On obtient ainsi des granulats pour l'élaboration de béton lignocellulosique ou pour l'isolation en vrac. Les anas peuvent être encore incorporés au mélange sec avant l'ajout du solvant.

### EXEMPLE 8 :

Les matériaux préparés suivant les exemples 1 à 5, additionnés ou non de charges pulvérulentes minérales ou végétales, moussés ou non, peuvent être broyés à des granulométries plus ou moins fines. Les poudres obtenues peuvent être remises en forme par thermomoulage.

### EXEMPLE 9 :

Des matériaux fabriqués selon les exemples 1 à 5, sont utilisés pour revêtir des feutres 100% végétaux. L'ensemble peut être thermocompressé pour obtenir des multicouches isolantes.

### EXEMPLE 10 :

Des mélanges de matières premières correspondant aux exemples 1 à 5 peuvent être directement soumis à une thermocompression réactive. Cette thermocompression peut permettre d'obtenir des plaques fines résistantes dont l'épaisseur dépend des charges utilisées et pouvant atteindre quelques millimètres.

Cela étant, le procédé, conforme à l'invention, permettra d'obtenir des agro matériaux qui trouveront une application notamment dans le domaine de la construction (comme isolant phonique, isolant thermique ou encore charge notamment granulaire pour l'élaboration de béton) du transport, de l'emballage, de l'équipement électronique afin d'être utilisée comme plaque fine, comme support de circuit imprimé et de puces, ou utilisés pour constituer des coques de téléphones portables, jetables par exemple, dans le domaine des technologies de communication.

Naturellement, d'autres modes de réalisation auraient pu être envisagés par l'homme du métier sans pour autant sortir du cadre de l'invention définie par les revendications ci-après.

## Revendications

1. Procédé d'obtention d'un agro matériau rigide ou élastomérique, notamment agro liant ou agro composite, à partir de coproduits ou produits agricoles issus du règne animal et/ou végétal dans lequel :
- on mélange un composé pectique issu du végétal qui se présente sous la forme de poussières de teillage de lin ou poussières de défibrage de chanvre,
un gel, et un solvant,
- on soumet le mélange à un traitement thermique par micro-ondes afin d'obtenir ledit agro matériau.

2. Procédé selon la revendication 1, dans lequel le composé pectique est de la poussière de teillage du lin et le gel est de la gélatine.

3. Procédé selon l'une des revendications 1 à 2, dans lequel ledit gel se présente sous la forme d'un gel d'origine protéinique, tel que la gélatine, ou encore un gel synthétique, ou encore un gel d'origine végétale tel qu'un gel à base d'algues.

4. Procédé selon l'une des revendications 1 à 3, dans lequel ledit mélange comprend, en outre, un additif d'hydrophobisation, tel que de l'huile, acides gras, inférieur à 5% en poids de la somme totale des composants du mélange.

5. Procédé selon l'une des revendications 1 à 4, dans lequel on fait subir au mélange un moussage protéinique avant l'étape de traitement thermique.

6. Procédé selon la revendication 5, dans lequel le moussage protéinique est réalisé à partir d'hémoglobine du sang animal.

7. Procédé selon l'une des revendications 1 à 6, dans lequel le traitement thermique porte le mélange à une température comprise entre 50°C et 100°C.

8. Procédé selon l'une des revendications 1 à 7, dans lequel on ajoute au mélange le cas échéant moussé, voire coloré, une charge, minérale ou organique, sous forme granulaire ou micronisée, avant durcissement du mélange.

9. Procédé selon la revendication 8, dans lequel la charge est de la matière lignocellulosique.

10. Procédé selon la revendication 9, dans lequel la matière lignocellulosique est choisie dans le groupe des coproduits céréaliers, produits du défibrage du lin ou du chanvre, pulpes de betterave, anas de lin, chènevotte, pailles, refus de silos, menues pailles de céréales ou tout autre coproduit lignocellulosique issus des activités agricoles, forestières, ou poussant à l'état sauvage.

11. Procédé selon les revendications 1 à 10, dans lequel on ajoute au mélange, chargé ou non, des fibres végétales, avant durcissement du mélange.

12. Procédé selon l'une des revendications 1 à 11, dans lequel on met en forme ledit mélange, chargé ou non, éventuellement fibré, par coulage, thermocompression, rotation, extrusion, calandrage, enduction, avant durcissement du mélange.

13. Procédé selon l'une des revendications 1 à 12 dans lequel l'ensemble des composants dudit mélange est biodégradable, à l'exception des charges minérales éventuelles, de telle façon à obtenir un agro matériau biodégradable.

14. Utilisation dudit agro matériau obtenu selon le procédé de l'une des revendications 1 à 13, dans le domaine de la construction, du transport, de l'emballage, de l'équipement électronique ou des technologies de communication.

15. Agro matériau rigide ou de type élastomèrique, obtenu selon le procédé de l'une des revendications 1 à 13.

## Patentansprüche

1. Verfahren zum Erhalt eines starren oder elastomeren Agrarmaterials, insbesondere eines Agrarbindemittels oder eines Agrarverbundstoffs, aus landwirtschaftlichen Nebenprodukten oder Produkten, die aus dem Tier- und/oder Pflanzenreich stammen, wobei:
- eine aus Pflanzen stammende Pektinzusammensetzung, die sich in Form von Schwingstäuben von Flachs oder Zerfaserungsstäuben von Hanf darstellt, gemischt wird mit
einem Gel und einem Lösemittel,
- das Gemisch einer Wärmebehandlung durch Mikrowellen unterzogen wird, um das Agrarmaterial zu erhalten.

2. Verfahren nach Anspruch 1, wobei die Pektinzusammensetzung aus Schwingstaub von Flachs und das Gel aus Gelatine besteht.

3. Verfahren nach einem der Ansprüche 1 bis 2, wobei das Gel in Form eines Gels mit proteinhaltigem Ursprung auftritt, wie etwa Gelatine oder auch synthetischen Gels oder auch eines Gels pflanzlichen Ursprungs, wie etwa eines Gels auf Algenbasis.

4. Verfahren nach einem der Ansprüche 1 bis 3, wobei das Gemisch ferner ein Hydrophobierungsadditiv umfasst, wie etwa Öl, Fettsäuren, zu weniger als 5 Gewichtsprozent der Gesamtsumme von Bestandteilen des Gemischs.

5. Verfahren nach einem der Ansprüche 1 bis 4, wobei das Gemisch vor dem Schritt der Wärmebehandlung einer Proteinschäumung unterzogen wird.

6. Verfahren nach Anspruch 5, wobei die Proteinschäumung mit Hämoglobin aus tierischem Blut durchgeführt wird.

7. Verfahren nach einem der Ansprüche 1 bis 6, wobei die Wärmebehandlung das Gemisch auf eine Temperatur zwischen 50 °C und 100 °C bringt.

8. Verfahren nach einem der Ansprüche 1 bis 7, wobei dem gegebenenfalls schaumigen, wenn nicht sogar farbigem Gemisch ein mineralischer oder organischer Füllstoff in granularer oder mikronisierter Form vor dem Aushärten des Gemischs hinzugefügt wird.

9. Verfahren nach Anspruch 8, wobei der Füllstoff aus Lignocellulosematerial ist.

10. Verfahren nach Anspruch 9, wobei das Lignocellulosematerial ausgewählt wird aus der Gruppe von Getreidenebenprodukten, Produkten der Zerfaserung von Lein oder von Hanf, Rübenfruchtfleisch, Schäben von Lein, Hanfnebenprodukten, Stroh, Restbeständen aus Silos, Getreidespreu oder sämtlichen weiteren Lignocellulosenebenprodukten, die aus landwirtschaftlichen, forstwirtschaftlichen Aktivitäten oder Wildwuchs stammen.

11. Verfahren nach einem der Ansprüche 1 bis 10, wobei dem Gemisch, mit Füllstoff versehen oder nicht, Pflanzenfasern vor dem Aushärten des Gemischs hinzugefügt werden.

12. Verfahren nach einem der Ansprüche 1 bis 11, wobei das gegebenenfalls faserige Gemisch, mit Füllstoff versehen oder nicht, vor dem Aushärten des Gemischs in Form gebracht wird durch Vergießen, Thermokompression, Rotation, Extrudieren, Kalandrieren, Beschichten.

13. Verfahren nach einem der Ansprüche 1 bis 12, wobei die Gesamtheit der Bestandteile des Gemischs biologisch abbaubar ist, mit Ausnahme der etwaigen mineralischen Füllstoffe, so dass ein biologisch abbaubares Agrarmaterial erhalten wird.

14. Verwendung des nach dem Verfahren eines der Ansprüche 1 bis 13 erhaltenen Agrarmaterials im Baugewerbe, Transportgewerbe, Verpackungsgewerbe, bei elektronischer Ausrüstung oder Kommunikationstechnologien.

15. Agrarmaterial, starr oder vom elastomeren Typ, welches nach dem Verfahren eines der Ansprüche 1 bis 13 erhalten wird.

## Claims

1. Method for obtaining a rigid or elastomeric agro-material, in particular an agro-binder or agro-composite, from agricultural by-products or products derived from the animal and/or plant kingdom wherein:
- a mixture is obtained of a plant-based pectic compound presented in the form of flax scutching dust or hemp stripping dust,
a gel, and a solvent,
- the mixture is subjected to a microwave heat treatment so as to obtain said agro-material.

2. Method according to claim 1, wherein the pectic compound is flax scutching dust and the gel is gelatine.

3. Method according to any of claims 1 to 2, wherein said gel is presented in the form of a gel of protein origin, such as gelatine, or a synthetic gel, or a gel of plant origin such as an algae-based gel.

4. Method according to any of claims 1 to 3, wherein said mixture further comprises a hydrophobisation additive, such as oil, fatty acids, less than 5% by weight of the total sum of the constituents of the mixture.

5. Method according to any of claims 1 to 4, wherein the mixture is subjected to protein foaming before the heat treatment step.

6. Method according to claim 5, wherein the protein foaming is performed using animal blood haemoglobin.

7. Method according to any of claims 1 to 6, wherein the heat treatment brings the mixture to a temperature between 50°C and 100°C.

8. Method according to any of claims 1 to 7, wherein a mineral or organic filler, in granular or micronised form, is added to the optionally foamed, or coloured, mixture, before hardening the mixture.

9. Method according to claim 8, wherein the filler is lignocellulosic material.

10. Method according to claim 9, wherein the lignocellulosic material is chosen from the group of cereal by-products, flax or hemp stripping products, beet pulps, flax shives, hemp tow, straw, silo residue, cereal chaff or any other lignocellulosic byproduct obtained from agricultural, forestry activities, or growing wild.

11. Method according to any of claims 1 to 10, wherein plant fibres are added to the mixture, optionally containing fillers, before hardening the mixture.

12. Method according to any of claims 1 to 11, wherein said mixture, optionally containing fillers, optionally containing fibres, is shaped by casting, thermocompression, rotation, extrusion, rolling, coating, before hardening the mixture.

13. Method according to any of claims 1 to 12 wherein all the constituents of said mixture are biodegradable, with the exception of the optional mineral fillers, so as to obtain a biodegradable agro-material.

14. Use of said agro-material obtained using the method according to any of claims 1 to 13, in the field of construction, transport, packaging, electronic equipment or communication technologies.

15. Rigid or elastomeric type agro-material, obtained using the method according to any of claims 1 to 13.
